# EUROPÄISCHE PATENTSCHRIFT

(11) **EP 3 945 864 B1**
(45) Veröffentlichungstag und Bekanntmachung des Hinweises auf die Patenterteilung: **07.06.2023**
(21) Anmeldenummer: 20718128.0
(22) Anmeldetag: 31.03.2020
(51) Int. Cl.: A23N 1/00, A47J 19/02, A23N 1/02

(54) **FRUCHTPRESSE**
FRUIT PRESS
PRESSE À FRUITS

(30) Priorität: 01.04.2019 AT 502812019
(43) Veröffentlichungstag der Anmeldung: 09.02.2022
(73) Patentinhaber: Citrocasa GmbH, 4020 Linz (AT)
(72) Erfinder: KAINDL, Engelbert, 4400 Steyr (AT)
(74) Vertreter: Hübscher & Partner Patentanwälte GmbH
(86) Internationale Anmeldenummer: PCT/AT2020/060134
(87) Internationale Veröffentlichungsnummer: WO 2020/198773

(56) Entgegenhaltungen:
- EP-A1- 2 412 252
- EP-A1- 3 206 510
- WO-A1-2017/202780

## Beschreibung

### Technisches Gebiet

Die Erfindung bezieht sich auf eine Fruchtpresse mit in einem Gestell gelagerten parallelen Wellen einerseits für zwei gegensinnig antreibbare Presswalzen mit über den Umfang verteilten Pressausnehmungen und anderseits für zwei unterhalb der Presswalzen vorgesehene, gegensinnig zu den Presswalzen antreibbare Stempelköpfe, die mit den Pressausnehmungen der Presswalzen zusammenwirkende Pressstempel bilden, und mit einem in einer Messerführung zwischen den Presswalzen verschiebbaren Messer, wobei die von ihren Wellen abziehbaren Presswalzen und Stempelköpfe zwischen einer Rückwand und einer vorderen Halterung einer am Gestell lösbar befestigten Handhabungseinheit gehalten sind.

### Stand der Technik

Zum Auspressen von Früchten, insbesondere Orangen, ist es bekannt (WO 2004/05216 A1), die Früchte in den Zwickelbereich zwischen zwei nebeneinanderliegenden Presswalzen zu fördern, wo sie in halbkugelförmigen Pressausnehmungen aufgenommen und mit Hilfe eines von unten zwischen die Presswalzen hochgehobenen Messers halbiert werden, bevor die Fruchthälften in den Pressausnehmungen durch Pressstempel ausgepresst werden, die auf unterhalb der Presswalzen gelagerten, synchron mit dem Presswalzen angetriebenen Stempelköpfen angeordnet sind. Diese Presswerkzeuge sind auf parallelen, konischen Mehrkantwellen lösbar aufgeschoben und werden jeweils auf ihren zugehörigen, in einem gemeinsamen Gestell gelagerten Wellen durch axiale Sicherungsschrauben gehalten. Da alle mit den Früchten bzw. dem Fruchtsaft in Berührung kommenden Teile einer solchen Fruchtpresse wiederholt gereinigt werden müssen, bedeutet dies, dass zum Reinigen sowohl die Presswalzen als auch die Stempelköpfe nach einem Lösen der jeweiligen Sicherungsschrauben von ihren Wellen abgezogen und nach ihrer Reinigung wieder auf die Wellen aufgeschoben und axial gesichert werden müssen, was mit einem erheblichen Arbeitsaufwand verbunden ist.

Um diesen Arbeitsaufwand zu vermeiden, wurde bereits vorgeschlagen (WO 2017/202780 A1), die Presswalzen und Stempelköpfe zwischen einer Rückwand und einer vorderen Halterung einer Handhabungseinheit vorzusehen, die mithilfe von zwei Schraubankern an zwei diagonal zueinander angeordneten Wellen der vier die Presswalzen und Stempelköpfe aufnehmenden Wellen befestigt ist, sodass die Handhabungseinheit nach einem Lösen der Schraubanker von den in einem Gestell gelagerten Wellen abgenommen werden kann, und zwar unter einem Abziehen der Presswalzen und Stempelköpfe von ihren Wellen. Die Handhabungseinheit kann demnach als Ganzes in einer geeigneten Wascheinrichtung gereinigt werden. Da die vordere Halterung mit der Rückwand durch einen Gewindebolzen lösbar verbunden ist, kann im Bedarfsfall die vordere Halterung von der Rückwand gelöst und die Presswalzen und Stempelköpfe für eine gesonderte Reinigung aus der Handhabungseinheit entnommen werden. Damit wird zwar das Abziehen der Presswalzen und Stempelköpfe von ihren Wellen erleichtert, doch bleibt der Handhabungsaufwand erheblich, weil zum Abnehmen der Handhabungseinheit die beiden Schraubanker gelöst und für das notwendige Reinigen der Presswalzen und Stempelköpfe zusätzlich die Handhabungseinheit zerlegt werden muss, um die Presswalzen und Stempelköpfe für sich reinigen zu können. Dazu kommt ein zusätzlicher Konstruktionsaufwand, um die Schraubanker mit den gegenüber der vorderen Halterung drehbar gelagerten Wellen verbinden zu können.

### Darstellung der Erfindung

Der Erfindung liegt somit die Aufgabe zugrunde, eine Fruchtpresse der in Rede stehenden Art so auszugestalten, dass nicht nur der Handhabungsaufwand für die Reinigung verringert, sondern auch die Konstruktionsbedingung vereinfacht werden kann.

Ausgehend von einer Fruchtpresse der eingangs geschilderten Art löst die Erfindung die gestellte Aufgabe dadurch, dass die sich axial an der vorderen Halterung abstützenden Presswalzen und Stempelköpfe zwischen Lageransätzen der Rückwand und Aufnahmen im Bereich der vorderen Halterung lösbar gehalten sind, dass die Aufnahmen für die Presswalzen und Stempelköpfe im Bereich der vorderen Halterung mit radialen Einführschlitzen für axiale Stützansätze der Presswalzen und Stempelköpfe versehen sind und dass die Rückwand oder die vordere Halterung der Handhabungseinheit die Messerführung mit dem Messer aufweist.

Aufgrund des Umstands, dass sich die Presswalzen und Stempelköpfe axial an der vorderen Halterung der mit dem Gestell verbundenen Handhabungseinheit abstützen, werden die auf die Presswerkzeuge einwirkenden, aufgrund der konischen Wellen im Sinne eines Abschiebens der Presswerkzeuge von ihren Wellen wirksamen Kräfte über die Handhabungseinheit auf das Gestell abgetragen, sodass der mit der Festlegung der Presswerkzeuge gegenüber den Wellen mithilfe von Schraubankern verbundene Konstruktionsaufwand entfällt.

Da die Aufnahmen für die Presswalzen und Stempelköpfe im Bereich der vorderen Halterung mit radialen Einführschlitzen für axiale Stützansätze der Presswalzen und Stempelköpfe versehen sind, brauchen die Presswalzen und Stempelköpfe zur Entnahme der Presswerkzeuge aus der Handhabungseinheit lediglich in Richtung der hierfür vorgesehenen Einführschlitze in radialer Richtung soweit ausgeschwenkt zu werden, bis sie von den Lageransätzen der Rückwand abgezogen werden können. Die die vordere Halterung und die Rückwand bildende Handhabungseinheit braucht somit zur Entnahme der Presswerkzeuge nicht zerlegt zu werden und kann demnach entsprechend stabil ausgebildet werden.

Mit der Anordnung der Messerführung und des Messers an der Rückwand oder der vorderen Halterung der Handhabungseinheit, wird mit dem Abnehmen dieser Handhabungseinheit vom Gestell auch das unmittelbar mit dem Saft und dem Fruchtfleisch der ausgepressten Früchte in Berührung kommende Messer mit seiner Führung vom Gestell gelöst und kann somit gemeinsam mit den Presswerkzeugen und gegebenenfalls in der Handhabungseinheit vorgesehenen Schalenabstreifern in einem gemeinsamen Waschvorgang gereinigt werden. Die Zuordnung des Messers und der Messerführung zur Rückwand bzw. zur vorderen Halterung der Handhabungseinheit bedarf keines besonderen zusätzlichen Aufwands, weil der Messerantrieb synchron zu den Presswerkzeugen erfolgen muss und daher von den Presswalzen bzw. den Stempelköpfen abgeleitet wird, die ja Teil der Handhabungseinheit sind. Allerdings wird die der Rückwand zugeordnete Messeranordnung wegen des Platzangebots bevorzugt.

Besonders vorteilhafte Handhabungsbedingungen ergeben sich, wenn das Gestell in der Befestigungsstellung der Handhabungseinheit durch deren Rückwand dicht abgedeckt wird, weil bei einer solchen Maßnahme die sonst notwendige aufwendige Reinigung des Gestells entfallen kann. Durch die das Gestell dicht abdeckende Handhabungseinheit wird ja eine gröbere Verunreinigung des Gestells weitgehend unterbunden.

Um im Bedarfsfall das Messer gesondert reinigen zu können, kann die Messerführung eine in der Symmetrieebene zwischen den Presswalzen verlaufenden Führungsschiene für das Messer umfassen, sodass das Messer entlang der Führungsschiene von der Rückwand oder der vorderen Halterung der Handhabungseinheit abgezogen werden kann.

Die Handhabungseinheit kann in einfacher Weise mithilfe eines die vordere Halterung und die Rückwand durchsetzenden Befestigungsbolzens am Gestell lösbar befestigt werden. Durchsetzt dieser Befestigungsbolzen zusätzlich die Messerführung, und zwar den Führungsteil, der die den Presswalzen folgenden Führungsflächen für die halbierten Früchte bildet, so kann auf eine gesonderte Fixierung der Messerführung gegenüber der Rückwand oder der vorderen Halterung verzichtet werden. Der Befestigungsbolzen ist lediglich so zu führen, dass er die Messerbewegung nicht behindert.

### Kurze Beschreibung der Erfindung

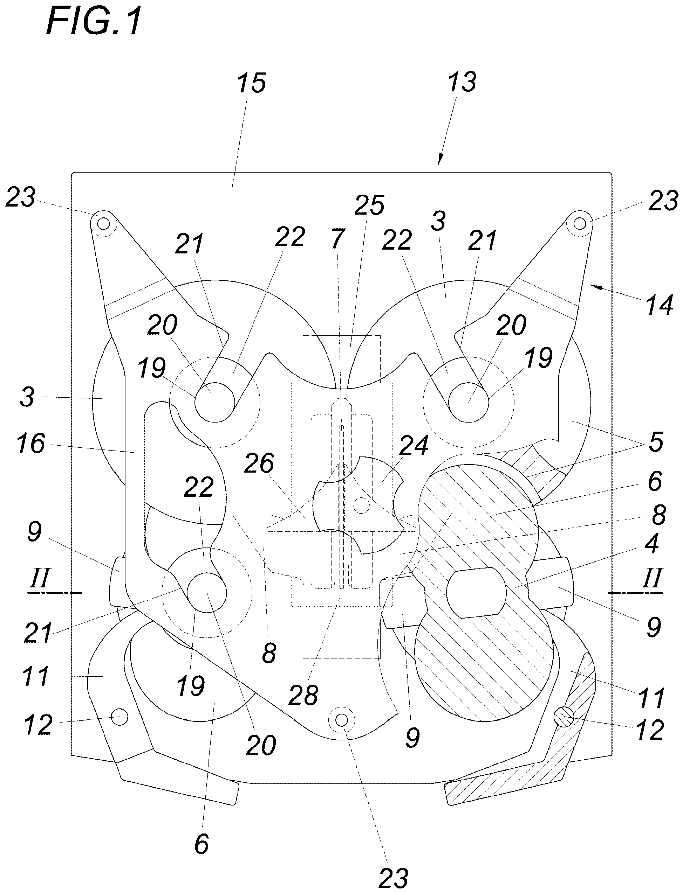

In der Zeichnung ist der Erfindungsgegenstand beispielsweise dargestellt. Es zeigen
- Fig. 1: eine Draufsicht auf die Handhabungseinheit einer erfindungsgemäßen Fruchtpresse,
- Fig. 2: diese Handhabungseinheit in einem Schnitt nach der Linie II-II der Fig. 1 und
- Fig. 3: eine der Fig. 2 entsprechende Darstellung der mit dem Gestell der Fruchtpresse verbundenen Handhabungseinheit.

### Wege zur Ausführung der Erfindung

Eine erfindungsgemäße Fruchtpresse weist ein Gestell 1 auf, aus dem parallele Wellen 2 zur Aufnahme von zwei Presswalzen 3 und zwei Stempelköpfen 4 vorstehen. Die Presswalzen 3 sind mit über den Umfang verteilten, halbkugelförmigen Pressausnehmungen 5 versehen, die mit kugelförmigen Pressstempeln 6 der Stempelköpfe 4 zusammenwirken. Da die Presswalzen 3 gegensinnig zu den Stempelköpfen 4 antreibbar sind, greifen die Pressstempel 6 der unterhalb der Presswalzen 3 angeordneten Stempelköpfe 4 während des Antriebs wiederholt in die Pressausnehmungen 5 der Presswalzen 3 ein.

Im Zwickelbereich zwischen den beiden Presswalzen 3 ist ein Messer 7 der Höhe nach verschiebbar gelagert, das über mit den Stempelköpfen 3 umlaufende, mit Messeranschlägen 8 zusammenwirkende Mitnehmernocken 9 in einer Messerführung 10 verschoben werden kann. Die von oben in den Zwickelbereich zwischen den Presswalzen 3 zugeführten Früchte, die von den in der Aufnahmestellung der Presswalzen 3 nach oben offenen Pressausnehmungen 5 aufgenommen werden, werden somit beim Abwärtsfördern durch die Presswalzen 3 an dem gegensinnig nach oben bewegten Messer 7 vorbeibewegt, das die Früchte halbiert, sodass die halbierten Früchte anschließend in den Pressausnehmungen 5 durch die in diese Pressausnehmungen 5 eingreifenden Pressstempel 6 ausgepresst werden. Die an den Pressstempeln 6 haftenbleibenden Schalen werden mithilfe von Abstreifern 11 abgenommen, die um Achsen 12 schwenkbar gelagert und mit einem Gewichtsmoment beaufschlagt sind, sodass sie in Anlage an den Pressstempeln 6 geführt werden.

Zur Reinigung müssen die Presswalzen 3 und Stempelköpfe 4 von ihren konischen, zur Drehmitnahme an gegenüberliegenden Seiten abgeflachten Wellen 2 abgezogen werden. Zur einfacheren Handhabung sind die Presswalzen 3 und Stempelköpfe 4 zu einer Handhabungseinheit 13 zusammengefasst, die ein Gerüst 14 aus einer Rückwand 15 und einer mit der Rückwand 15 starr verbundenen, vorderen Halterung 16 umfasst. In diesem Gerüst 14 sind die Presswalzen 3 und Stempelköpfe 4 zwischen der vorderen Halterung 16 und der Rückwand 15 gehalten. Die Rückwand 15 bildet vorstehende Lageransätze 17, die in eine Zentrierausnehmung 18 der Presswalzen 3 und Stempelköpfe 4 eingreifen. Die vordere Halterung 16 ist mit Aufnahmen19 für axiale Stützansätze 20 der Presswalzen 3 und Stempelköpfe 4 versehen. Diese Stützansätze 20 können durch radiale Einführschlitze 21 in die Aufnahmen 19 eingeführt werden.

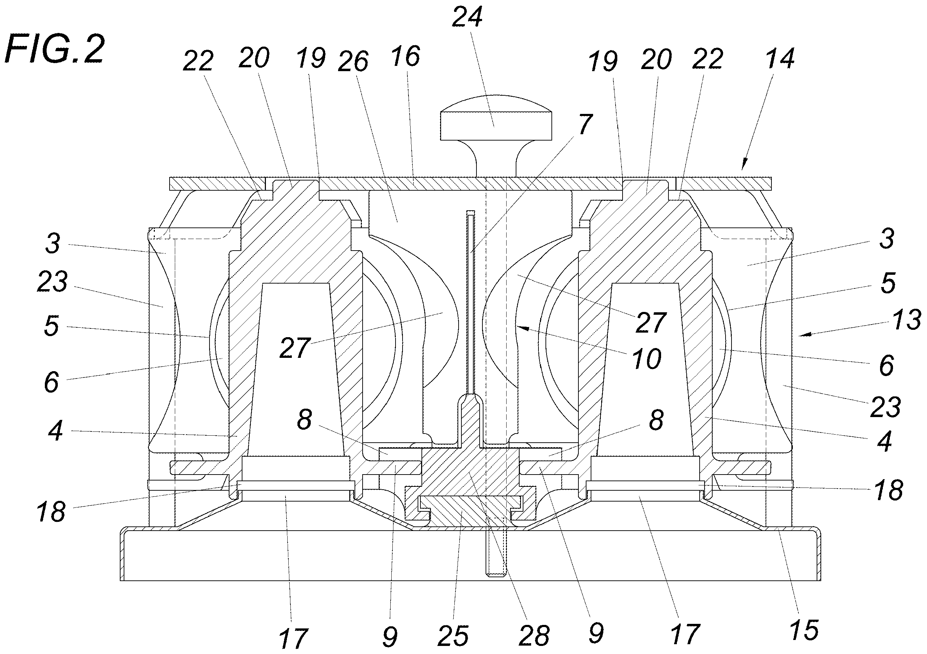

Die Presswalzen 3 und Stempelköpfe 4 bilden Schultern 22 zur axialen Abstützung an der vorderen Halterung 16, die mit der Rückwand 15 durch Abstandhalter 23 starr verbunden ist. Wie sich aus der Fig. 2 ergibt, ist bei einem Eingriff der Lageransätze 17 in die Zentrierausnehmungen 18 zwischen den Schultern 22 der Presswalzen 3 und Stempelköpfe 4 einerseits und der vorderen Halterung 16 ein Spiel zumindest entsprechend der Eingriffstiefe der Lageransätze 17 in die Zentrierausnehmungen 18 vorhanden. Aufgrund dieses Spiels können die Presswalzen 3 und Stempelköpfe 4 von den Lageransätzen 17 axial abgezogen und dann in Richtung der Einführschlitze 21 aus der Handhabungseinheit 13 entnommen werden.

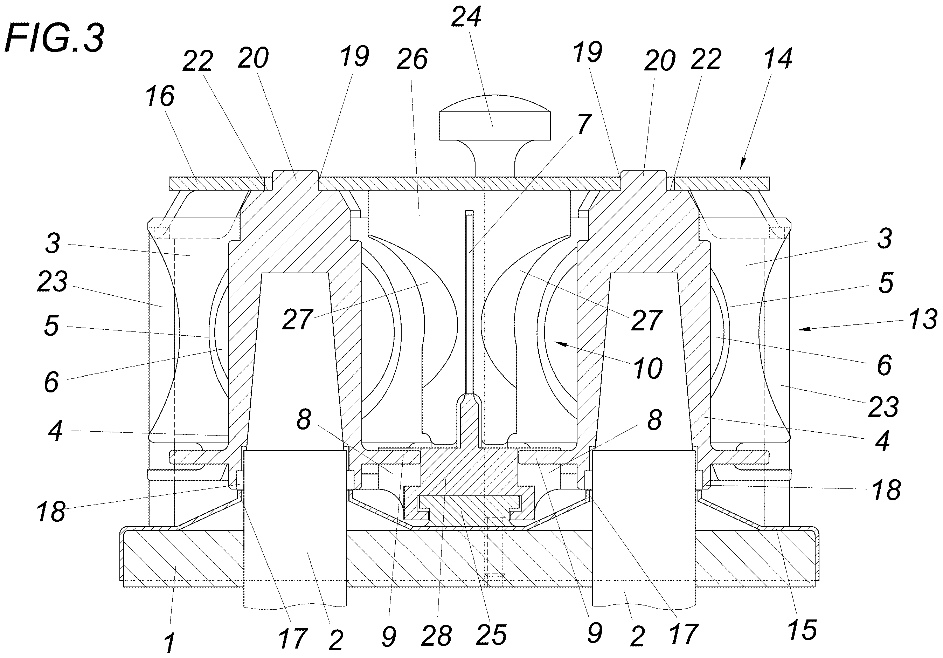

Wegen der Konizität der Wellen 2 wirken beim Pressvorgang auf die Presswalzen 3 und Stempelköpfe 4 axiale Kräfte im Sinne eines Abschiebens der Presswalzen 3 und Stempelköpfe 4 von ihren Wellen 2. Aus diesem Grund stützen sich die Presswalzen 3 und Stempelköpfe 4 bei montierter Handhabungseinheit 13 gemäß Fig. 3 mit ihren Schultern 22 an der vorderen Halterung 16 axial ab. Dies wird durch eine entsprechende Abstimmung der Arbeitslage der Presswalzen 3 und Stempelköpfe 4 auf den Wellen 2 gegenüber dem starren Gerüst 14 erreicht. Wird nämlich das Gerüst 14 in der Stellung nach Fig. 2 mithilfe eines die vordere Halterung 16 und die Rückwand 15 durchsetzenden Befestigungsbolzen 24 am Gestell 1 festgeschraubt, so werden die Presswalzen 3 und Stempelköpfe 4 zunächst auf ihre Wellen 2 aufgeschoben, bis ein formschlüssiger Sitz erreicht wird, der ein weiteres Aufschieben der Presswalzen 3 und Stempelköpfe 4 auf ihre Wellen 2 verhindert. Das Gerüst 14 muss dann noch um das Spiel zwischen der vorderer Halterung 16 und den Schultern 22 bis zur Anlage am Gestell 1 verlagert werden, was einerseits das Austreten der Lageransätze 17 der Rückwand 15 aus den Zentrierausnehmungen 18 der Presswalzen 3 und Stempelköpfe 4 und anderseits eine Anlage der Schultern 22 der Presswalzen 3 und Stempelköpfe 4 an der vorderen Halterung 16 zur Folge hat.

Beim Abnehmen der Handhabungseinheit 13 werden in umgekehrter Reihenfolge zunächst die Lageransätze 17 in die Zentrierausnehmungen 18 eingeschoben, bevor die Presswalzen 3 und Stempelköpfe 4 durch die Rückwand 15 des Gerüsts 14 von den Wellen 2 abgezogen werden, sodass die vom Gestell 1 abgenommene Handhabungseinheit 13 wieder die Stellung gemäß der Fig. 2 einnimmt.

Die Messerführung 10 setzt sich aus einer gemäß dem Ausführungsbeispiel an der Rückwand 15 vorgesehenen Führungsschiene 25 und einem Führungsteil 26 zusammen, der Führungsflächen 27 für die halbierten Früchte bildet. Das Messer 7 selbst ist auf einem Schlitten 28 gelagert, der Entlang der Führungsschiene 25 verschiebbar ist und die Messeranschläge 8 aufweist, die mit den Mitnehmernocken 9 der Stempelköpfe 4 zusammenwirken. Mithilfe des Befestigungsbolzens 24, der den Schlitten 28 in einem Langloch durchsetzt, wird auch der Führungsteil 26 gegenüber der Rückwand 15 und der vorderen Halterung 16 fixiert, sodass nach einem Entfernen des Befestigungsbolzens 24 der Schlitten 28 mit dem Messer 7 zusammen mit dem Führungsteil 26 durch ein Abschieben von der Führungsschiene 25 aus dem Gerüst 14 entfernt werden kann.

Die Abstreifer 11 sind ebenfalls Teil der Handhabungseinheit 13. Die sie aufnehmenden Achsen12 stehen von der Rückwand 15 vor und bilden Steckachsen, auf die die Abstreifer 11 lediglich aufgesteckt werden müssen.

Da das Messer 7 und die Messerführung 10 der Rückwand 15 und nicht dem Gestell 1 zugeordnet sind, sind in der Rückwand 15 lediglich Durchführungen für die Wellen 2 vorzusehen. Dies stellt eine vorteilhafte Voraussetzung dafür dar, den Pressraum gegenüber dem Gestell 1 abzudichten, indem die Rückwand 15 entsprechend geschlossen ausgebildet wird und das Gestell 1 dicht abdeckt, wie dies der Fig. 3 entnommen werden kann.

## Patentansprüche

1. Fruchtpresse mit in einem Gestell (1) gelagerten parallelen Wellen (2) einerseits für zwei gegensinnig antreibbare Presswalzen (3) mit über den Umfang verteilten Pressausnehmungen (5) und anderseits für zwei unterhalb der Presswalzen (3) vorgesehene, gegensinnig zu den Presswalzen (3) antreibbare Stempelköpfe (4), die mit den Pressausnehmungen (5) der Presswalzen (3) zusammenwirkende Pressstempel (6) bilden, und mit einem Messer (7), wobei die von ihren Wellen (2) abziehbaren Presswalzen (3) und Stempelköpfe (4) zwischen einer Rückwand (15) und einer vorderen Halterung (16) einer am Gestell (1) lösbar befestigten Handhabungseinheit (13) gehalten sind, **dadurch gekennzeichnet, dass** das Messer in einer Messerführung zwischen den Presswalzen verschiebbar ist, dass die sich axial an der vorderen Halterung (16) abstützenden Presswalzen (3) und Stempelköpfe (4) zwischen Lageransätzen (17) der Rückwand (15) und Aufnahmen (19) im Bereich der vorderen Halterung (16) lösbar gehalten sind, dass die Aufnahmen (19) für die Presswalzen (3) und Stempelköpfe (4) im Bereich der vorderen Halterung (16) mit radialen Einführschlitzen (22) für axiale Stützansätze (20) der Presswalzen (3) und Stempelköpfe (4) versehen sind und dass die Rückwand (15) oder die vordere Halterung (16) der Handhabungseinheit (13) die Messerführung (10) mit dem Messer (7) aufweist.

2. Fruchtpresse nach Anspruch 1, **dadurch gekennzeichnet, dass** die Rückwand (15) in der Befestigungsstellung der Handhabungseinheit (13) das Gestell (1) dicht abdeckt.

3. Fruchtpresse nach Anspruch 1 oder 2, **dadurch gekennzeichnet, dass** die Messerführung (10) eine in der Symmetrieebene zwischen den Presswalzen (3) verlaufenden Führungsschiene (25) für das Messer (7) umfasst.

4. Fruchtpresse nach einem der Ansprüche 1 bis 3, **dadurch gekennzeichnet, dass** die Handhabungseinheit (13) mithilfe eines die vordere Halterung (16) und die Rückwand (4) durchsetzenden Befestigungsbolzens (24) am Gestell (1) lösbar befestigt ist, der den Führungsflächen (27) für die halbierten Früchte bildenden Führungsteil (26) der Messerführung (10) durchsetzt.

5. Fruchtpresse nach einem der Ansprüche 1 bis 4, **dadurch gekennzeichnet, dass** die sich axial an der vorderen Halterung (16) abstützenden Presswalzen (3) und Stempelköpfe (4) zwischen Lageransätzen (17) der Rückwand (15) und Aufnahmen (19) im Bereich der vorderen Halterung (16) lösbar gehalten sind.

6. Fruchtpresse nach Anspruch 5, **dadurch gekennzeichnet, dass** die Aufnahmen (19) für die Presswalzen (3) und Stempelköpfe (4) im Bereich der vorderen Halterung (16) mit radialen Einführschlitzen (22) für axiale Stützansätze (20) der Presswalzen (3) und Stempelköpfe (4) versehen sind.

## Claims

1. Fruit press having parallel shafts (2), mounted in a frame (1), for two pressing rollers (3), which can be driven in opposite directions and have pressing recesses (5) distributed over the periphery, and also for two ram heads (4) which are provided below the pressing rollers (3), can be driven in opposite directions to the pressing rollers (3) and form pressing rams (6) cooperating with the pressing recesses (5) of the pressing rollers (3), and having a blade (7), wherein the pressing rollers (3) and ram heads (4) which can be removed from their shafts (2) are held between a rear wall (15) and a front holder (16) of a handling unit (13) releasably fastened to the frame (1), **characterised in that** the blade can be moved between the pressing rollers in a blade guide, that the pressing rollers (3) and ram heads (4) which are axially braced against the front holder (16) are releasably held between bearing projections (17) of the rear wall (15) and receivers (19) in the region of the front holder (16), that the receivers (19) for the pressing rollers (3) and ram heads (4) are provided in the region of the front holder (16) with radial introducing slots (22) for axial support projections (20) of the pressing rollers (3) and ram heads (4) and that the rear wall (15) or the front holder (16) of the handling unit (13) comprises the blade guide (10) with the blade (7).

2. Fruit press as claimed in claim 1, **characterised in that** the rear wall (15) sealingly covers the frame (1) when the handling unit (13) is in the fastened position.

3. Fruit press as claimed in claim 1 or 2, **characterised in that** the blade guide (10) comprises a guide rail (25) for the blade (7), which extends in the plane of symmetry between the pressing rollers (3).

4. Fruit press as claimed in any one of claims 1 to 3, **characterised in that** the handling unit (13) is releasably fastened to the frame (1) with the aid of a fastening bolt (24) passing through the front holder (16) and the rear wall (4), which bolt passes through the guide part (26) of the blade guide (10), which forms guide surfaces (27) for the halved fruits.

5. Fruit press as claimed in any one of claims 1 to 4, **characterised in that** the pressing rollers (3) and ram heads (4) which are axially braced against the front holder (16) are releasably held between bearing projections (17) of the rear wall (15) and receivers (19) in the region of the front holder (16).

6. Fruit press as claimed in claim 5, **characterised in that** the receivers (19) for the pressing rollers (3) and ram heads (4) are provided in the region of the front holder (16) with radial introducing slots (22) for axial support projections (20) of the pressing rollers (3) and ram heads (4).

## Revendications

1. Presse à fruits comprenant des arbres parallèles (2) montés dans un cadre (1), d'une part pour deux rouleaux de pressage (3) qui peuvent être entraînés dans des directions opposées et qui comportent des évidements de pressage (5) distribués sur la circonférence, et d'autre part pour deux têtes de poinçon (4) qui sont agencées en dessous des rouleaux de pressage (3) et qui peuvent être entraînées dans des directions opposées à celles des rouleaux de pressage (3), de manière à former des poinçons de pressage (6) qui coopèrent avec les évidements de pressage (5) des rouleaux de pressage (3), et avec un couteau (7), dans laquelle les rouleaux de pressage (3) et les têtes de poinçon (4), qui peuvent être retirés de leurs arbres (2), sont maintenus entre une paroi arrière (15) et un support avant (16) d'une unité de manipulation (13) qui est fixée au cadre (1) de façon détachable, **caractérisée en ce que** le couteau peut être déplacé dans un guide de couteau entre les rouleaux de pressage, **en ce que** les rouleaux de pressage (3) et les têtes de poinçon (4), qui sont supportés axialement sur le support avant (16), sont maintenus de façon amovible entre des saillies de palier (17) de la paroi arrière (15) et des logements (19) dans la région du support avant (16), **en ce que** les logements (19) pour les rouleaux de pressage (3) et les têtes de poinçon (4) dans la région du support avant (16) sont pourvus de fentes d'introduction radiales (22) destinées à recevoir des saillies de support axiales (20) des rouleaux de pressage (3) et des têtes de poinçon (4), et **en ce que** la paroi arrière (15) ou le support avant (16) de l'unité de manipulation (13) comporte le guide de couteau (10) avec le couteau (7).

2. Presse à fruits selon la revendication 1, **caractérisée en ce que** la paroi arrière (15) recouvre le cadre (1) de façon étanche dans la position de fixation de l'unité de manipulation (13).

3. Presse à fruits selon la revendication 1 ou 2, **caractérisée en ce que** le guide de couteau (10) comprend un rail de guidage (25) pour le couteau (7) qui s'étend dans le plan de symétrie entre les rouleaux de pressage (3).

4. Presse à fruits selon l'une quelconque des revendications 1 à 3, **caractérisée en ce que** l'unité de manipulation (13) est fixée de façon amovible au cadre (1) à l'aide d'un boulon de fixation (24) qui passe à travers le support avant (16) et la paroi arrière (4) et qui passe à travers la partie de guidage (26) du guide de couteau (10) de manière à former des surfaces de guidage (27) pour les fruits coupés en deux.

5. Presse à fruits selon l'une quelconque des revendications 1 à 4, **caractérisée en ce que** les rouleaux de pressage (3) et les têtes de poinçon (4), qui sont supportés axialement sur le support avant (16), sont maintenus de façon amovible entre des saillies de palier (17) de la paroi arrière (15) et des logements (19) dans la région du support avant (16).

6. Presse à fruits selon la revendication 5, **caractérisée en ce que** les logements (19) pour les rouleaux de pressage (3) et les têtes de poinçon (4) sont pourvus, dans la région du support avant (16), de fentes d'introduction radiales (22) qui sont destinées à recevoir des saillies de support axiales (20) des rouleaux de pressage (3) et des têtes de poinçon (4).
